# EUROPEAN PATENT APPLICATION

(11) **EP 1 310 952 A2**
(43) Date of publication of application: **14.05.2003**
(21) Application number: 02025184.9
(22) Date of filing: 11.11.2002
(51) Int. Cl.: G11B 7/09, G11B 7/0065, G11B 7/135

(54) **Optical information recording device**

(30) Priority: 13.11.2001 JP 2001347653
(71) Applicant: Minebea Co., Ltd., Kitasaku-gun, Nagano-ken (JP); Optware Co., Ltd., Yokohama-shi, Kanagawa-ken, 222-0033 (JP)
(72) Inventor: Matsumoto, Kozo, c/o Minebea Co., Ltd., Asaba-cho, Iwata-gun, Shizuoka-ken (JP); Kato, Hideki, c/o Minebea Co., Ltd., Asaba-cho, Iwata-gun, Shizuoka-ken (JP); Horimai, Hideyoshi, c/o Optware Co., Ltd., ku Yokohama-shi Kanagawa-ken 222-0033 (JP); Kinoshita, Masaharu, c/o Optware Co., Ltd., ku Yokohama-shi Kanagawa-ken 222-0033 (JP); Lim, Pang-Boey, c/o Optware Co., Ltd., ku, Yokohama-shi, Kanagawa-ken, 222-0033 (JP)
(74) Representative: Patentanwälte Schaad, Balass, Menzl & Partner AG

(57) **Abstract**

An optical information recording device for recording information utilizing holography comprises a recording medium moving means for moving a recording medium, a follow-up control circuit (94) for controlling an irradiation position, and a signal converting means (51) for obtaining a reproduction signal from an address servo-control area including a light source for radiating an information beam and a reference beam onto the recording medium. The follow-up control circuit is composed of a binary-coding means (52) for binary-coding the reproduction signal and a follow-up signal circuit (50), and detects the travel amount of the irradiation position moving means and generates, according to the travel amount detected and for a specific time during which the irradiation position of the information beam and the reference beam follows, an irradiation position control signal for controlling an irradiation position moving in one information recording area through an output terminal of a gain control amplifier (47).

## Description

### BACKGROUND OF THE INVENTION

### 1. Field of the Invention

The present invention relates to an optical information recording device for recording information, by utilizing holography, in each of a plurality of information recording areas provided on a recording medium.

### 2. Description of the Related Art

A holographic recording method of recording information in a recording medium by utilizing holography is performed generally by writing in the recording medium an interference pattern generated by superposing light having image information on reference light inside the recording medium. When reproducing the information recorded, the recording medium is irradiated with the reference light, whereby the image information is reproduced by diffraction of the interference pattern.

In recent years, a volume holography, particularly a digital volume holography has been developed for practical use, attracting the public attention. In the volume holography, the thickness of the recording medium is positively utilized and the interference pattern is three-dimensionally written in the recording medium, where the efficiency of diffraction is enhanced by increasing the thickness and the recording capacity is increased by means of multiple recording. The digital volume holography is a computer-oriented holographic recording method, in which the same recording medium and recording method as the volume holography are used but image information to be recorded is limited to a binary-coded digital pattern. In this digital volume holography, picture information, for example an analog picture, is once digitized and developed into a two-dimensional digital pattern, and the pattern is recorded as image information. For reproduction, the digital pattern information is read to be decoded, thereby restoring its original picture information for display. Thus, even if the signal-to-noise ratio (SN ratio) is somewhat unsatisfactory in reproduction, the original information can be reproduced very faithfully by performing a differential detection and decoding the binary-coded data thereby correcting errors.

A general recording device, which utilizes light for recording information in a disk-shaped recording medium, includes an optical head to irradiate the recording medium with light for recording information. In this recording device, the recording medium is irradiated, while rotated, with light emitted from the optical head, whereby information is recorded in the recording medium. Also, in this recording device, a semiconductor laser is generally used as a light source for generating light for recording information.

In the holographic recording method, information can be recorded sequentially in a plurality of information recording areas of a recording medium such that the recording medium is irradiated, while rotated, with information beam and reference beam in the same way as the above described general recording device. Here, it is desirable to use a practical semiconductor laser as a light source for information beam and reference beam in the same way as the general recording device.

In this case, however, when the recording medium for holographic recording is formed of a photosensitive material currently used for holography, it is difficult to provide exposure energy large enough to record information by means of an interference pattern in one information recording area of the recording medium in a short time. To overcome the difficulty, the exposure time may be extended in order to provide sufficient exposure energy to one information recording area. This, however, generates another problem in that the distance, for which the information recording area travels during the exposure time for one information recording area, increases, thereby lowering the accuracy of information. The above-mentioned problems will hereafter be described in detail with reference to examples. In case a high-power light source such as a pulse laser is used in place of a semiconductor laser, it is well possible to record information in a recording medium while it is rotated. Let's take an example which uses as a light source a pulse laser which has a maximum output of several kilowatts and is capable of emitting a pulse beam of several ten nanoseconds. Here, it is assumed that the intensity of light on the recording medium reaches 200 watts. Also, it is assumed that the pulse beam has a pulse width of 20 ns and the information recording area has a linear velocity of 2 m/s. In this case, the distance the information recording area travels during the exposure time for one information recording area does not exceed about one tenth of the optical wavelength (about 0.04 µm), and therefore the accuracy of information can be duly kept. However, it is not practical to use the above described pulse laser as a light source.

Next, another example is taken which uses a semiconductor laser as a light source. Here, it is assumed that the intensity of light on the recording medium reaches 20 mW and the information recording area has a linear velocity of 2 m/s. In this case, in order to supply the same exposure energy as the above described first example using a pulse laser to one information recording area, its exposure time needs to be 200 µs, which is 10,000 times as much as the exposure time allocated for the first example. During this exposure time, the information recording area travels as long as 400 µm, making it difficult to record information by means of an interference pattern.

In order to solve the above mentioned problem, the present inventors disclosed "Optical Information Recording Device and Method" in Japanese Patent Application No.2000-375452(this application was published on June 28, 2002 therefore not constituting prior art under 35 U.S.C.§102). The "optical information recording device" disclosed therein records information by holography in each of a plurality of information recording areas of a recording medium. In order to record information in the information recording areas by means of an interference pattern generated due to information beam interfering with reference beam, the optical information recording device comprises a light source for radiating the information beam and the reference beam onto the recording medium, a recording medium moving means for moving the recording medium, and an irradiation position moving means for moving the irradiation position of the information beam and the reference beam so as to make the irradiation position follow for a specific time one information recording area moving.

Thus, in the optical information recording device, the recording medium is moved by the recording medium moving means and is irradiated with the information beam and the reference beam radiated by the light source, and the irradiation position of the information beam and the reference beam is moved by the irradiation position moving means so as to make the irradiation position follow for a specific time the one information recording area moving, whereby one information recording area continues to be irradiated with the information beam and the reference beam for a specific time, making it possible to irradiate any one information recording area with the information beam and the reference beam for a time long enough to record information in the information recording area without causing the irradiation position of the information beam and the reference beam to deviate from the information recording area.

In the optical information recording device, the irradiation position moving means is moved according to the irradiation position determined from the information on the position of a pit formed in the recording medium, the rotation speed and the like in order to make the irradiation position follow for a specific time the one information recording area moving. Consequently, the optical information reading device has the following problems.

A linear motor is used in a means for making the irradiation position of the information beam and the reference beam follow for a specific time the one information recording area moving. Since the linear motor stops anywhere when a driving signal is turned off, it happens that its optical head is not necessarily positioned at the middle point and fails to have its position identified at the time of starting the device or mounting a recording medium. In such a case, it is not possible to judge in which direction the optical head should be moved by means of the irradiation position moving means.

Also, when the optical head is moved by the irradiation position moving means under the conditions described above, the optical head cannot return to the central position. In view of the foregoing circumstances, the range of the optical head travel by the irradiation position moving means is limited.

Further, the device employs a method of detecting the position of a recording medium from the position of a pit formed in the recording medium, but a recording portion in the recording medium is a mirror, in which no pit is formed. Therefore, when the recording medium is at a stop, there is no information on the direction of movement of the irradiation position moving means, thus possibly giving the wrong direction of control.

Also, the optical head changes its speed, making acceleration, stop, deceleration, etc. in order to make the irradiation position of the information beam and the reference beam follow for a specific time the one information recording area moving. On the other hand, the position of the recording medium is calculated from the pit position information, making it difficult to determine the position of the recording medium.

In short, the above-mentioned problems are caused by the fact that the irradiation position follow-up by the irradiation position moving means is controlled by an open-loop. This means that when the pit position information can be accurately obtained, there is no problem involved, but once the pit position information is lost, the control may be out of place.

The present invention has been made in light of the above problems, and its object is to provide an optical information recording device, which comprises a feedback means for making the irradiation position of the irradiation position moving means follow one information recording area so as to detect the accurate position of the irradiation position moving means, and which thereby is capable of recording information, by utilizing holography, in each of the information recording areas of a recording medium while the recording medium is rotated.

### SUMMARY OF THE INVENTION

In order to attain the above mentioned object, according to a first aspect of the present invention, there is provided an optical information recording device, which records information by means of holography in each of a plurality of data areas of a recording medium having, in addition to the plurality of data areas, a plurality of address-servo areas each composed of information for generating a basic clock as timing standards for various operations in an optical information recording and reproducing apparatus, information for performing focus servo-control operation by means of a sampled servo-control method, information for performing tracking servo-control operation by means of a sampled servo-control method, and address information, and which comprise:
a light source for radiating an information beam and a reference beam onto the recording medium so as to record information in the plurality of data areas by means of an interference pattern generated due to the information beam interfering with the reference beam;
a recording medium moving means for moving the recording medium;
an irradiation position moving means for moving an irradiation position of the information beam and the reference beam by controlling the irradiation position so as to make the irradiation position follow for a specific time one data area moving, the irradiation position moving means being adapted to detect a travel amount of the irradiation position moving means and generate, according to the travel amount detected and for the specific time during which the irradiation position of the information beam and the reference beam follows, an irradiation position control signal for controlling the irradiation position moving in the one data area; and
an optical head moving means for moving the irradiation position moving means in a track direction of the recording medium.

According to a second aspect of the present invention, in the optical information recording device of the first aspect, the irradiation position moving means generates the irradiation position control signal according to a signal obtained from the address servo-control areas and according to the travel amount of the irradiation position moving means. Accordingly, the feedback control is enabled, whereby information is recorded accurately.

According to a third aspect of the present invention, in the optical information recording device of the first or second aspect, the irradiation position moving means makes a phase comparison between a signal obtained when the irradiation position moving means is positioned at a middle point of the travel amount and the signal obtained from the address-servo areas, and controls the irradiation position moving means so as to surrender a phase difference between both signals to zero. Accordingly, the control circuit can be realized by using a PLL (phase locked loop) circuit commercially available.

According to a fourth aspect of the present invention, in the optical information recording device of any one of the first to third aspects, the irradiation position moving means comprises: a light reflecting means; a light radiating means for radiating light on the light reflecting means; and a plurality of light detecting means for detecting, as reflected light, the light radiated from the light radiating means on the light reflecting means and reflected thereat, the light detecting means being arranged in a circumferential direction of the recording medium. Accordingly, the follow-up control operation can be performed accurately in the data area of the targeted track.

According to a fifth aspect of the present invention, in the optical information recording device of the fourth aspect, the light reflecting means, the light radiating means, and the light detecting means are provided on a side of the irradiation position moving means opposite to a side facing the recording medium. Accordingly, the irradiation position moving means can be designed with reduced restrictions.

According to a sixth aspect of the present invention, in the optical information recording device of the fourth or fifth aspect, the light reflecting means is made of a rectangular aluminum foil and has a length in the circumferential direction of the recording medium smaller than a travel range of the irradiation position moving means. Accordingly, the follow-up control operation can be performed accurately without deviating from the data area of the intended track.

According to a seventh aspect of the present invention, in the optical information recording device of the fourth aspect, the light reflecting means, the light irradiating means, and the light detecting means are arranged so that the plurality of light detecting means can produce respective outputs equal to one another when the irradiation position moving means is positioned at the middle point of the travel range. Accordingly, the irradiation position moving means and the follow-up control circuit can be designed easily.

According to an eighth aspect of the present invention, in the optical information recording device of the fourth aspect, a driving signal for driving the irradiating position moving means is of a sine wave. Accordingly, the irradiation position moving means moves smoothly, and the composition of the driving circuit is made simple, and since there are no high-frequency noises generated, the signal recorded out from the recording medium is kept free from noises.

According to a ninth aspect of the present invention, in the optical information recording device of the fourth aspect, the irradiation position moving means is provided with a compensating means which, in case of respective outputs of said light detecting means being different from one another, makes the respective outputs equal to one another when a driving signal for driving the irradiation position moving means passes a point of zero. This aspect, together with the first aspect described above, provides the optical information recording device, in which the pit position information is accurately gained without getting lost thereby eliminating uncontrollability.

### BRIEF DESCRIPTION OF THE DRAWINGS

Figs. 1A and 1B explain a recording medium used in an embodiment of the present invention, respectively showing a section thereof and a part of one track thereof;
Fig. 2 is a composition diagram of an optical information recording and reproducing apparatus including the optical information recording device according to the present invention;
Figs. 3A to 3D explain a driving mechanism of an optical head according to the present invention, respectively showing a top perspective view of the optical head, a bottom perspective view of an irradiation position moving means, a front view of a part of the optical head, and a bottom view of a part of the irradiation position moving means seen from the direction Z in Fig. 3B;
Figs. 4A to 4C explain an example of a light detecting means, respectively showing a top view, a circuit diagram, and an explanatory diagram of application;
Figs. 5A to 5D explain a tracking operation in the present invention, wherein Figs. 5A and 5B show an example of a method of generating tracking error information, and Figs. 5C and 5D show an example of a tracking servo-control method;
Figs. 6A to 6B explain an operation of the optical head at the time of recording information;
Fig. 7 explains a travel of an irradiation position;
Figs. 8A to 8D explain a method of matching the irradiation position of information beam and reference beam to the position of a data area concerned;
Fig. 9 explains a follow-up control circuit for controlling an irradiation position, and a signal converting means;
Figs. 10A to 10F explain an operation of the circuit and the means in Fig. 9, wherein Fig. 10A shows pit portions and mirror portions on an arbitrary track in the recording medium, and Figs. 10B to 10F show waveforms at respective points v, w, x, y and z indicated in Fig. 9;
Fig. 11 explains a pickup mounted on the optical head; and
Flg. 12 is a block diagram showing the composition of a detecting circuit.

### DETAILED DESCRIPTION OF THE PREFERRED EMBODIMENTS

The embodiment of the present invention will be described in detail with reference to the drawings.

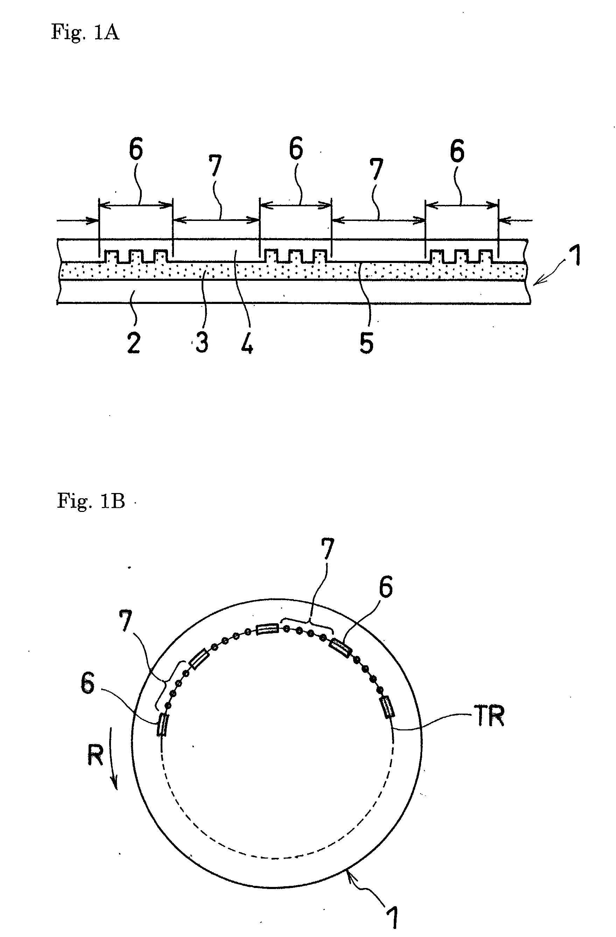

First, the composition of an optical information recording medium 1 (hereinafter referred to as recording medium) is described with reference to Figs. 1A and 1B. The recording medium 1 comprises: a disk-shaped transparent substrate 2 made of polycarbonate or the like; a hologram layer 3 as an information recording layer, in which information is recorded by utilizing volume holography; a reflecting film 5; and a protective layer 4, wherein the components are stacked in this order. A plurality of address servo-control areas 6 each extending radially and functioning as a positioning area are formed at a portion between the hologram layer 3 and the protective layer 4 and are spaced apart from one another with a predetermined angle, and a plurality of data areas 7 shaped sectorial are each present between two adjacent address-servo areas 6.

Information for performing focus servo-control operation and tracking servo-control operation by a sampled servo-control method, and address information are prerecorded as embossed pits and the like in the address servo-control areas 6. The focus servo-control operation can be performed by means of a reflecting face of the reflecting film 5. Wobbled pits, for example, can be used as information for performing the tracking servo-control operation.

The transparent substrate 2 has a thickness of 0.6 mm or less, and the hologram layer 3 has a thickness of 10 µm or more. The hologram layer 3 is formed of a hologram material whose optical characteristics such as refractive index, dielectric constant, reflectance and the like vary according to the intensity of light with which it is irradiated. Photopolymer HRF-600 (product name) made by DuPont Co., or the like is used as a hologram material. The reflecting film 5 is formed of, for example, aluminum.

The principle of recording information described in the present invention can be realized in the same way as that disclosed in, for example, Japanese Patent Laid-Open Application No. Hei 11-311937 (Optical Information Recording Device and Method, and Optical Information Reproducing Device and Method), and detailed description thereof is omitted. Also, illustrations and explanations of a means for recording and reproducing information in the recording medium 1 are omitted from the following description which rather explains a control means for moving the irradiation position of information beam and reference beam to thereby make the above irradiation position follow for a specific time one information recording area moving, and which also explains means relevant to the control means.

Referring back to Fig. 1B, the recording medium 1 is disk-shaped and has a plurality of tracks TR. The plurality of address-servo areas 6 are provided at each of the tracks TR at regular intervals. The plurality of data areas 7 are each provided between two adjacent address-servo areas 6 each consisting of one or more portions. Fig. 1B shows the data areas 7 each consisting of four portions provided at equal intervals between two adjacent address-servo areas 6 arranged along the track direction.

The address-servo areas 6 have the following kinds of information prerecorded therein as embossed pits or the like: information for generating a basic clock CB as timing standards for various operations in the optical information recording and reproducing apparatus; information for performing focus servo-control operation by means of a sampled servo-control method; information for performing tracking servo-control operation by means of a sampled servo-control method; and address information.

In this connection, the information for performing focus servo-control operation may not be recorded in the address-servo areas 6, in which case the focus servo-control operation may be performed by using the interface between an air gap layer described later and the reflecting film 5. The information for generating a basic clock, the information for performing focus servo-control operation and the information for performing tracking servo-control operation are for matching the irradiation positions of information beam, reference beam for recording, and reference beam for reproduction to each data area 7, and correspond to information for positioning in the present invention. The address information is for identifying each of the information recording areas 7.

Here, an optical information recording method in the present invention is outlined with reference to Fig. 1B. In the present invention, when information is recorded in the data area 7 of the recording medium 1, the recording medium 1 is rotated (moved), for example, in a direction indicated by symbol R. This causes the address-servo areas 6 and the data areas 7 to move in the direction R. An optical head (not shown) described later irradiates the recording medium 1 with the information beam and the reference beam for recording so that information is recorded in the data areas 7 by an interference pattern generated due to the information beam interfering with the reference beam.

Also, the irradiation position of the information beam and the reference beam for recording is moved by the optical head so as to follow for a specific time one data area 7 moving, whereby the one data area 7 is kept irradiated for the specific time with the information beam and the recording reference beam. Therefore, one data area 7 can be irradiated with the information beam and the reference beam for a time period long enough to record information in the one data area 7 without causing the irradiation position of the information beam and the reference beam to deviate from the one data area 7.

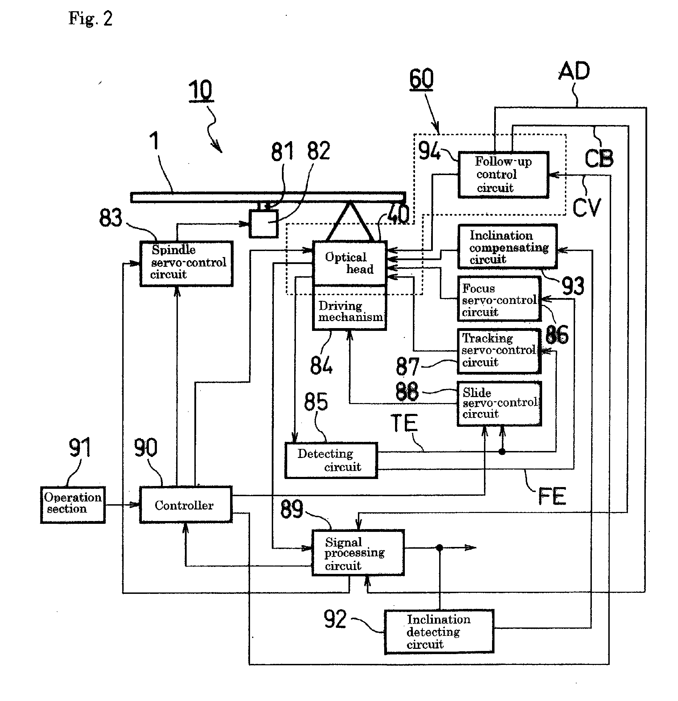

Referring now to Fig. 2, the optical information recording and reproducing apparatus 10 includes: a spindle 81 which has the recording medium 1 attached thereto and which works as a recording medium rotating means; a spindle motor 82 for rotating the spindle 81; and a spindle servo-control circuit 83 for controlling the spindle motor 82, wherein the recording medium 1 is rotated at a constant rotation speed.

The optical information recording and reproducing apparatus 10 further includes: an optical head 40 which radiates information beam and recording reference beam on the recording medium 1 thereby recording information, and which also irradiates reproduction reference beam on the recording medium 1 thereby detecting reproduction light so as to reproduce information recorded in the address-servo areas 6 and the data areas 7; and a driving mechanism 84 which allows the optical head 40 to travel in a radial direction of the recording medium 1.

The optical information recording and reproducing apparatus 10 further includes: a detecting circuit 85 for detecting a focus error signal FE and a tracking error signal TE out of output signals from the optical head 40; and a focus servo-control circuit 86 which drives a head body (not shown) of the optical head 40 to travel perpendicularly to the surface of the recording medium 1 in accordance with the focus error signal FE detected by the detecting circuit 85, thereby performing focus servo-control operation.

The optical information recording and reproducing apparatus 10 further includes: a tracking servo-control circuit 87 which drives the head body to travel in the radial direction of the recording medium 1 in accordance with the tracking error signal TE detected by the detecting circuit 8, thereby performing tracking servo-control circuit; and a slide servo-control circuit 88 which controls the driving mechanism 84 in accordance with the tracking error signal TE and an instruction from a controller 90 to be described later, thereby performing slide servo-control operation for moving the optical head 40 in a radial direction of the recording medium 1.

The optical information recording and reproducing apparatus 10 further includes: a signal processing circuit 89; the aforementioned controller 90 for controlling entirely the optical information recording and reproducing apparatus 10; and an operation section 91 for giving various instructions to the controller 90. The signal processing circuit 89 decodes output data of a CCD array (not shown) in the optical head 40 by means of the basic clock CB reproduced by a follow-up control circuit 94 to be described later, thereby reproducing data recorded in the data areas 7 of the recording medium 1 and identifying an address.

The optical information recording and reproducing apparatus 10 further includes: an inclination detecting circuit 92 for detecting a relative inclination of the head body to the recording medium 1 in accordance with an output signal of the signal processing circuit 89; and an inclination correcting circuit 93 for correcting the above relative inclination by changing the position of the head body, in accordance with an output signal of the inclination detecting circuit 92, in a direction in which the inclination of the head body to the surface of the recording medium 1 changes.

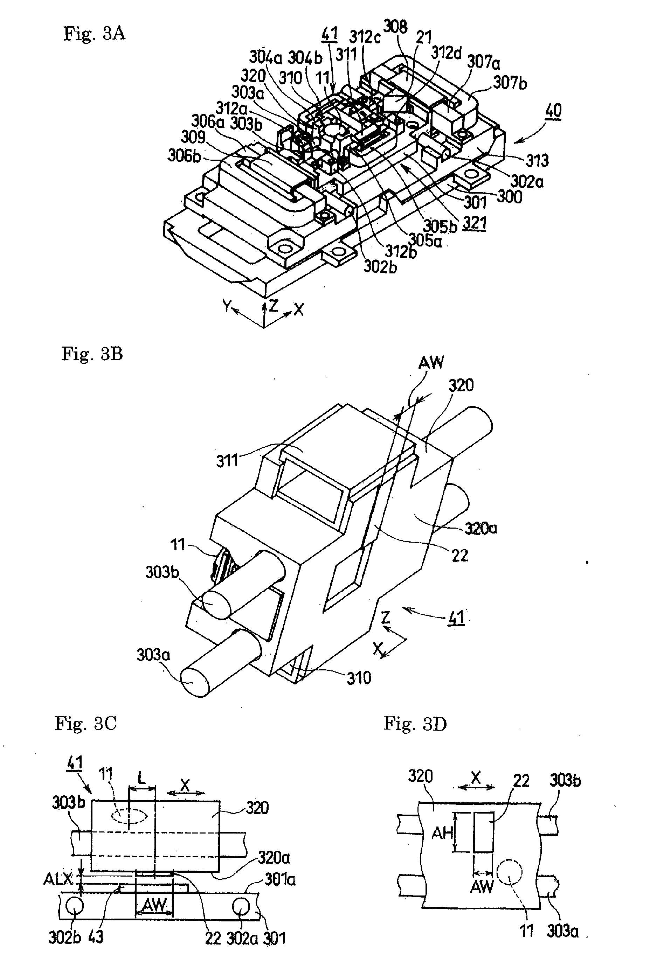

The optical information recording and reproducing apparatus 10 further includes: the aforementioned follow-up control circuit 94 which, while information is recorded, drives the head body to travel substantially along a track, thereby controlling the irradiation position of the information beam and the recording reference beam so that the irradiation position follows for a specific time one data area 7 moving. Hereinafter, the follow-up control circuit 94 combined with an irradiation position moving means 41 to be described later with reference to Fig. 3B will be referred to generically as follow-up control means 60.

The controller 90 inputs the basic clock CB outputted from the signal processing circuit 89 and the address information, and also controls the optical head 40, the spindle servo-control circuit 83, the slide servo-control circuit 88, the follow-up control circuit 94, and the like. The basic clock CB outputted from the signal processing circuit 88 is inputted to the spindle servo-control circuit 83. The controller 90 has a CPU (central processing unit), a ROM (read-only memory) and a RAM (random access memory), and functions such that the CPU executes a program stored in the ROM, using the RAM as a work area.

Here, for better understanding of the present invention, the structure of a pickup 111 mentioned in "Optical Information Recording Device and Method and Optical Information Reproducing Device and Method" disclosed in Japanese Patent Laid-open Application No. Hei 11-311937 will be explained. The pickup 111 is mounted on the optical head 40.

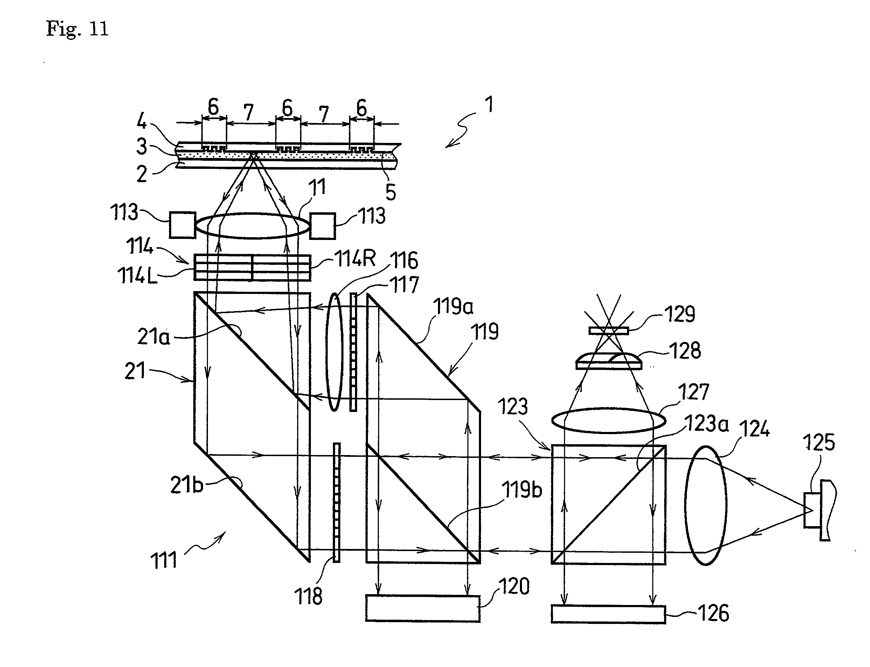

Referring to Fig. 11, the pickup 111 includes: an objective lens 11 disposed with one side thereof facing the transparent substrate 2 of the recording medium 1 set in place; an actuator 113 adapted to allow the objective lens 11 to move in both the thickness and radial directions of the recording medium 1; a halved optical-rotation plate 114 disposed so as to face a side of the objective lens 11 opposite to the one side facing the transparent substrate 2 of the recording medium 1; and a prism block 21 disposed so as to sandwich the halved optical-rotation plate 114 with the objective lens 11. In Fig. 11, the halved optical-rotation plate 114 comprises an optical-rotation plate 114L arranged at the left side of its optical axis, and an optical-rotation plate 114R arranged at the right side of the optical axis. The optical-rotation plates 114L and 114R rotate a polarization direction by +45°and -45°, respectively. The prism block 21 has a half-reflecting face 21a and a reflecting face 21b arranged in this order from the halved optical-rotation plate 114. The half-reflecting face 21a and the reflecting face 21b are arranged in parallel with each other and have their normal lines inclined at 45°to the optical axis of the objective lens 11.

The pickup 111 further includes a prism block 119. The prism block 119 has a reflecting face 119a and a half-reflecting face 119b, and is arranged at one side of the prism block 21 so as to face to the half-reflecting face 21a such that the reflecting face 119a and the half-reflecting face 119b are positioned to correspond to and to be parallel with the half-reflecting face 21a and the reflecting face 21b of the prism block 21, respectively.

The pickup 111 further includes: a convex lens 116 and a phase space optical modulator 117, which are arranged between the prism block 21 and the prism block 119 in this order from the prism block 21 and positioned to correspond to the half-reflecting face 21a and the reflecting face 119a; and a space optical modulator 118 arranged between the prism block 21 and the prism block 119 and positioned to correspond to the reflecting face 21b and the half-reflecting face 119b.

The phase space optical modulator 117 has a number of pixels arranged to form a grid configuration, and is adapted to spatially modulate the phase of light by selecting the phase of outgoing light for each pixel. A liquid crystal element can be used as the phase space optical modulator 117. The space optical modulator 118 has a number of pixels arranged to form a grid configuration, and is adapted to spatially modulate light according to its intensity so as to generate information beam holding information by selecting the transmitting state or the cutoff state of light for each pixel. A liquid crystal element can be used as the space optical modulator 118.

The pickup 111 further includes a CCD array 120 as a detecting means positioned so as to receive returning light returning from the recording medium 1, which passes through the space optical modulator 118 and then is reflected at the half-reflecting face 119b of the prism block 119.

The pickup 111 further includes: a beam splitter 123; and a collimator lens 124 and a light source device 125, which are disposed at a side of the prism block 119 opposite to a side facing the space optical modulator 118, and which are arranged in this order from the prism block 119.

The beam splitter 123 has a half-reflecting face 123a inclined to be normal to the half-reflecting face 119b and to make an angle of 45° to the optical axis of the collimator lens 124 as well. The light source device 125 emits coherent linear polarized light and may be constituted by, for example, a semiconductor laser.

The pickup 111 further includes: a photodetector 126 positioned so as to receive light emitted from the light source device 125 and reflected at the half-reflecting face 123a of the beam splitter 123; and a convex lens 127, a cylindrical lens 128, and a quartered photodetector 129, which are disposed at a side of the beam splitter 123 opposite to a side facing the photodetector 126 in this order from the beam splitter 123.

The photodetector 126 receives light from the light source device 125, and its output is used for automatically adjusting the output of the light source device 125. The quartered photodetector 129 is publicly known and has four light receiving parts defined by a line in parallel with the track of the optical information recording medium 1 and another line perpendicular to the line.

The cylindrical lens 128 is arranged such that the central axis of its cylindrical face is inclined at an angle of 45° with respect to the lines defining the four receipting parts of the quartered photodetector 129. The phase space optical modulator 117, the space optical modulator 118, and the light source device 125 are controlled by the controller 90 shown in Fig. 2. The controller 90 has information of a plurality of modulation patterns so that the phase of light is spatially modulated at the phase space optical modulator 117.

The operation section 91 selects arbitrarily a modulation pattern from the plurality of modulation patterns, the controller 90 provides the phase space optical modulator 117 with information of a modulation pattern selected either by the controller 90 itself according to a specific condition or by the operation section 91, and the phase space optical modulator 117 spatially modulates the phase of light with the modulation pattern according to the information provided by the controller 90. And the respective reflectances of the half-reflecting faces 21a and 119a are properly set, for example, so that the information beam and the recording reference beam which are incident on the recording medium 1 are equal in intensity to each other.

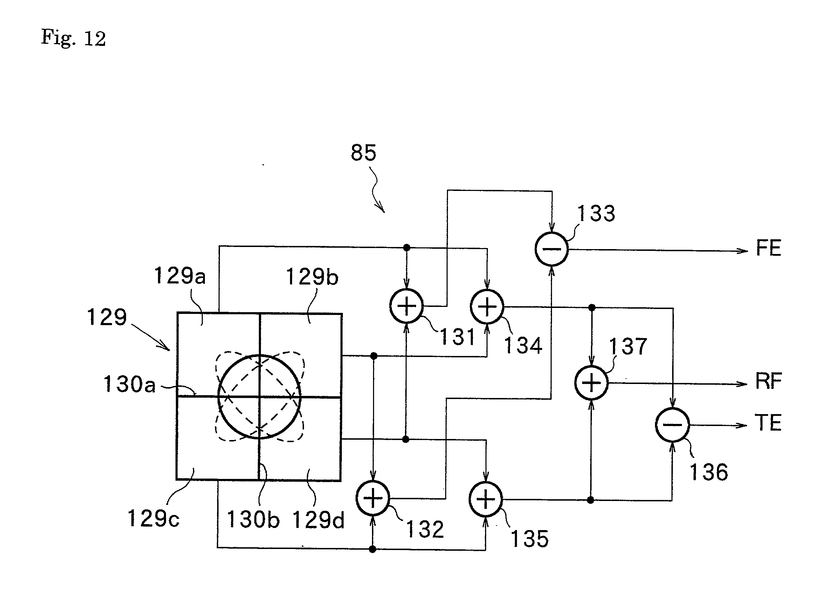

Fig. 12 is a block diagram of the composition of the detecting circuit 85 shown in Fig 2. The detecting circuit 85 comprises the quartered photodetector 129, adders 131, 132, 134, 135 and 137, and subtracters 133 and 136, and detects the focus error signal FE, the tracking error signal TE, and the reproduction signal RF in accordance with the output of the quartered photodetector 129.

Outputs of light receiving parts 129a and 129d of the quartered photodetector 129 diagonally opposite to each other are added by the adder 131, and outputs of light receiving parts 129b and 129c diagonally opposite to each other are added by the adder 132. The difference between the output at the adder 131 and the output at the adder 132 is obtained by the subtracter 133, and the focus error signal FE by an astigmatism method is generated at the output of the subtracter 133. Similarly, outputs of the light receiving parts 129a and 129b arranged adjacent to each other and along the track direction of the quartered photodetector 129 are added by the adder 134, and outputs of the light receiving parts 129c and 129d arranged adjacent to each other and along the track direction of the quartered photodetector 129 are added by the adder 135. The difference between the output at the adder 134 and the output at the adder 135 is obtained by the subtracter 136, and the tracking error signal TE by a push-pull method is generated at the output of the subtracter 136.

The reproduction signal RF is generated by adding the output of the adder 134 to the output of the adder 135 by means of the adder 137. In this embodiment, the reproduction signal RF is a signal obtained by reproducing information recorded in the address-servo areas 6 of the recording medium 1.

Next, the driving mechanism of the optical head 40 is explained with reference to Figs. 3A to 3C. Referring to Fig. 3A, the optical head 40 has the objective lens 11 facing the recording medium 1 (See Fig. 2). Above the objective lens 11, the recording medium 1 is attached to the spindle 81 (See Fig. 2) with its transparent substrate 2 facing the objective lens 11 and is rotated at a specific speed.

The optical head 40 includes arms 303a and 303b extending in the tangential direction of the track (in the direction X). The arms 303a and 303b are fixedly held to a carriage 301 such that their one ends are held by retainers 312a and 312b, respectively, and the other ends are held by retainers 312c and 312d, respectively. The optical head 40 is mounted on a carriage 320, and travels on the arms 303a and 303b in the tangential direction of the track (in the direction X) on the carriage 301, as described later.

The carriage 301 is mounted on arms 302a and 302b, which are fixedly held to a table 313 by retainers (not shown), and travels, together with the carriage 320, on the arms 302a and 302b in the direction perpendicular to the track direction (in the direction Y) on the table 313, as described later.

Also, the optical head 40 includes coils (not shown) for focus servo-control and for inclination adjustment attached to one end thereof defined with respect to the radial direction of the recording medium, and coils (not shown) for focus servo-control and for inclination adjustment attached to the other end thereof opposite to the one end.

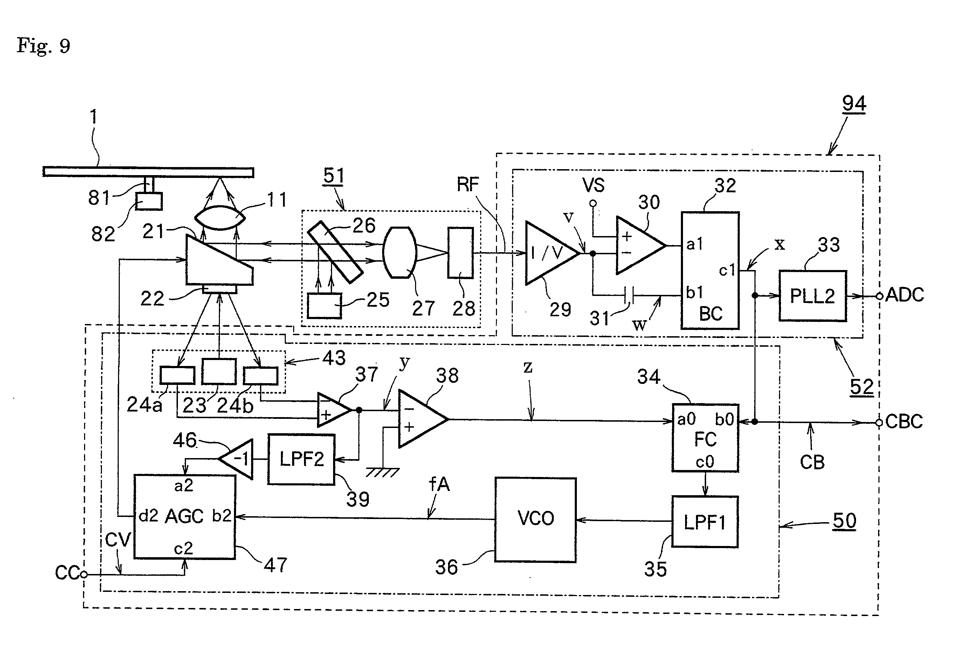

In the optical head 40, further, a coil 310, a magnet 304a penetrating the coil 310, and a magnet 304b are disposed opposite to a coil 311, a magnet 305a penetrating the coil 311, and a magnet 305b, respectively, with the two opposite units being arrayed along the arms 302a and 302b on the carriage 301. The coils 310 and 311, and the magnets 304a, 304b, 305a and 305b constitute a linear motor, and when a driving signal is applied to the coils 310 and 311 (through the output terminal d2 of a gain control amplifier 47 shown in Fig. 9) as described later, the carriage 320 travels in the direction X along the arms 303a and 303b.

The above-mentioned control operation is performed, as described later, by the follow-up control circuit 94 shown in Fig. 2. Hereinafter, the parts mounted on the carriage 320 are collectively referred to as irradiation position moving means 41, and the parts mounted on the carriage 301 are collectively referred to as optical head moving means 321.

Similarly, a coil 308, a magnet 307a penetrating the coil 308, a magnet 307b, are disposed opposite to a coil 309, a magnet 306a penetrating the coil 309, and a magnet 306b, respectively, with the two opposite units arrayed along the arms 302a and 302b on the table 313. The coils 308 and 309, and the magnets 307a, 307b, 306a and 306b constitute a linear motor, and when a driving signal is applied to the coils 308 and 309 as described later, the carriage 301 travels in the direction Y along the arms 302a and 302b. This control operation is performed by a publicly known method using the tracking servo-control circuit 87 shown in Fig. 2.

The optical head 40 can have its position changed by coils and magnets (neither thereof shown) in the direction perpendicular to the surface of the recording medium (in the direction Z) and also in the direction in which the inclination of the optical head 40 to the surface of the recording medium changes. This control operation is performed by a publicly known method using the focus servo-control circuit 86 and the inclination correcting circuit 93 shown in Fig. 2.

A recording means is formed on the carriage 320 so that information is recorded in data areas of the recording medium by an interference pattern generated by the information beam interfering with the reference beam. The recording means comprises a light source (not shown) for emitting the information beam and the reference beam, the prism 21, and the objective lens 11, and a desired data area of the recording medium is irradiated with the beams.

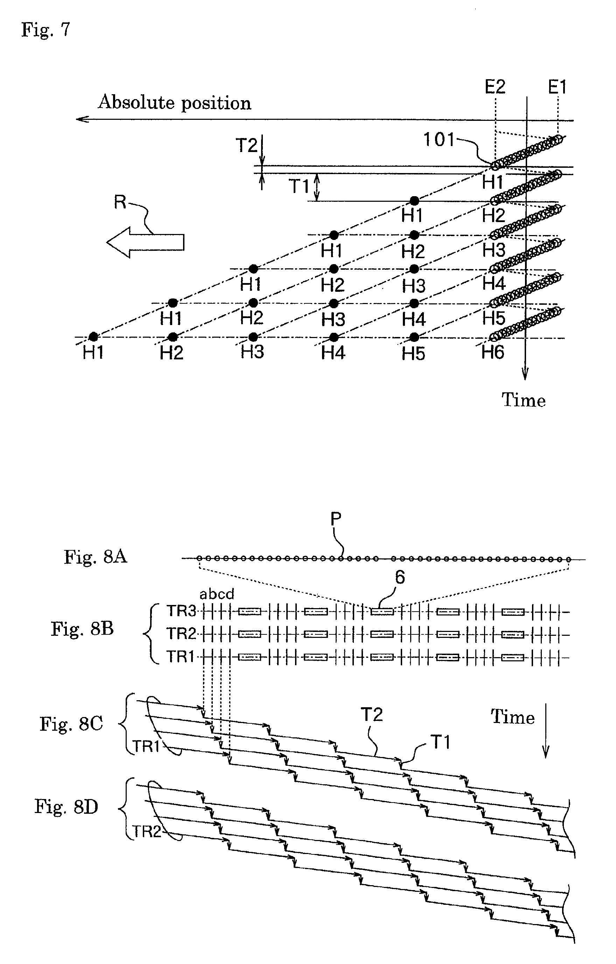

In this connection, the objective lens 11 is attached to the carriage 320 with a predetermined positional relation to a reflecting plate 22 described in upcoming Fig. 3B so that the focal point is set on the recording medium. That is to say, when the center of the objective lens 11 is set at the center of an arbitrary data area 7 (described later with reference to Fig. 8), the objective lens 11 receives reflected light from the middle of the reflecting plate 22.

Referring to Fig. 3B, a rectangular reflecting plate 22 made of an aluminum foil, a glass and the like is provided on a bottom 320a of the carriage 320 (on a side of the irradiation position moving means 41 opposite to a side facing the recording medium, namely, on a side opposite to a side on which the objective lens 11 is provided). A length AW of the reflecting plate 22 in the circumferential direction of the recording medium is smaller than the traveling distance (to be described later) of the irradiation position moving means 41. The carriage 320 travels on the arms 303a and 303b in the direction of the tangent of the track (in the direction X), as described later.

Referring to Fig. 3C, the reflecting plate 22 is provided on the bottom 320a of the carriage 320 traveling on the aforementioned arms (only 303b thereof is shown), and on a top 301a of the carriage 301 and directly under the reflecting plate 22, a light detecting means 43 composed of a light emitting diode (light irradiating means) for radiating light onto the reflecting plate 22 (light reflecting means) and a plurality of photodiodes for receiving the light emitted from the light emitting diode and reflected at the reflecting plate 22 is arranged in the circumferential direction of the recording medium (in the direction X).

Referring to Fig. 3D, the length AW of the reflecting plate 22 provided on the bottom 320a of the carriage 320 in the circumferential direction of the recording medium is smaller than the traveling distance (to be described later) of the irradiation position moving means 41, and at the middle point of the traveling distance, outputs equal to one another can be obtained from the plurality of photodiodes of the light detecting means 43.

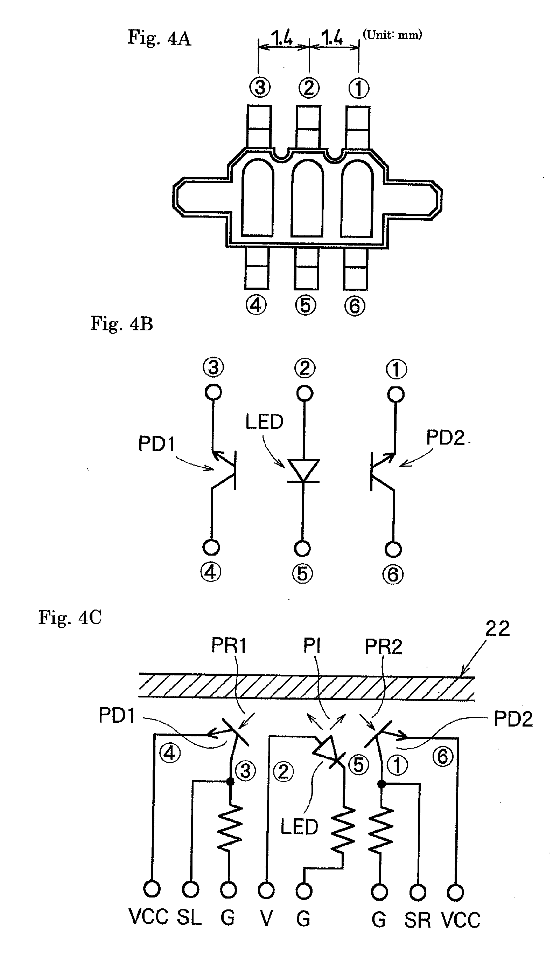

The light detecting means 43 will be described with reference to Figs. 4A to 4C. As the light detecting means 43, for example, a reflection type photo-interrupter SG-114F2 (product name) made by Kodenshikogyo Co. (Optoelectronics Industry Co.) is used.

Referring to Fig. 4B, the reflection type photo-interrupter SG-114F2 as the light detecting means 43 comprises one light emitting diode LED, and two photodiodes PD1 and PD2, which have independent terminals, namely, anode (2) and cathode (5), emitter (3) and collector (4), and emitter (1) and collector (6), respectively, and which are arranged at an interval of 1.4 mm as shown in Fig. 4A.

Referring to Fig. 4C, the light detecting means 43 is arranged such that the light emitting face of the light emitting diode LED and the light receiving faces of the photodiodes PD1 and PD2 oppose the reflecting plate 22. For example, according to experiments, the reflection type photo-interrupter SG-114F2 gave an optimum value when the distance ALX (see Fig. 3C) between the reflecting plate 22 and the light detecting means 43 was 0.8 mm and the width AW (see Figs. 3C and 3D) of the reflecting plate 22 was 1.6 mm. In this connection, the length AH (See Fig. 3D) of the reflecting plate 22 (the length in a radial direction of the recording medium), which is appropriately determined in consideration of the expanding angle of light emitted from the light emitting diode, was set at 205 mm in this case.

In the above case, the terminals (4) and (6) are each supplied with a voltage VCC of 5 V, the terminals (3), (1) and (5) are grounded respectively through resistors R1, R3 and R2, and the terminal (2) is supplied with a voltage V of 3 V. When light PI from the light emitting diode LED is incident on the reflecting plate 22, lights PR1 and PR2 reflected thereat are incident on the photodiodes PD1 and PD2, respectively, and their outputs can be obtained at the terminals (3) and (1) as signals SL and SR, respectively.

When the light emitting diode LED is positioned to the center of the reflecting plate 22, the reflected lights PR1 and PR2 incident on the photodiodes PD1 and PD2, respectively, are equal in amount to each other, and consequently the signals SL and SR obtained at the terminals (3) and (1) are also equal in output to each other.

And when the carriage 320 travels in the direction X (see Fig. 3B) as described later, the reflected lights PR1 and PR2 incident on the photodiodes PD1 and PD2, respectively, vary in amount to be different from each other, rendering the photodiodes PD1 and PD2 different in output from each other. The relevant signal processing will be described later with reference to Fig. 9.

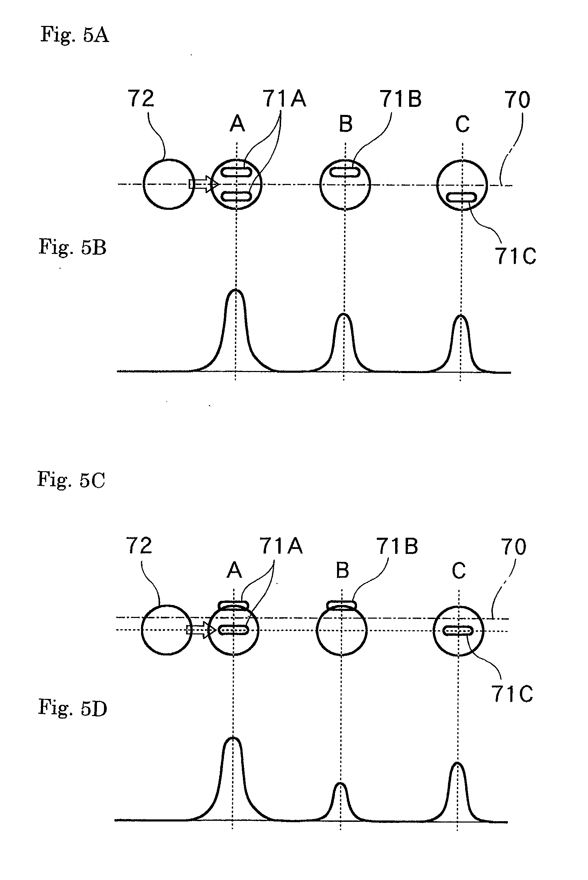

Next, generation of tracking error information and tracking servo-control in the present invention will be explained with reference to Figs. 5A to 5D. In this example, two pits 71A, 71A, one pit 71B, and one pit 71C, as positioning information for tracking servo-control, are formed in the address-servo area 6 of the recording medium 1 in this order in the direction of propagation of a light beam 72 along a track 70, as shown in Fig. 5A.

The two pits 71A, 71A are disposed symmetrical about the track 70 at a position A as shown in Figs. 5A and 5C, and make a timing standard for detecting the amounts of lights received when passing positions B and C, respectively. The pit 71B is disposed at the position B deviating from the track 70 to one side. The pit 71C is disposed at the position C deviating from the track 70 to the other side opposite to the one side to which the position B deviates.

First, the generation of tracking error information will be described. When the light beam 72 propagates accurately on the track 70, the amounts received by the photodetector of the light beam 72 passing the positions A, B and C, respectively, are as shown in Fig. 5B. In short, the amount of the light beam received when passing the position A is largest, and the amount of the light beam received when passing the position B and the amount of the light beam received when passing the position C are smaller than that at the position A and equal to each other.

On the other hand, when the light beam 72 propagates off the track 70 closer to the pit 71C, the amounts received by the photodetector of the light beam 72 passing the positions A, B and C are as shown in Fig. 5D. In short, the amount of the light beam received when passing the position A is largest, the amount of the light beam received when passing the position C is second largest, and the amount of the light beam received when passing the position B is smallest. The absolute value of the difference between the amount of the light beam received when passing the position B and the amount of the light beam received when passing the position C increases with an increase in the deviation of the light beam 72 from the track 70.

Although not illustrated, when the light beam 72 propagates off the track 70 closer to the pit 71B, the amount of the light beam received when passing the position A is largest, the amount of the light beam received when passing the position B is second largest and the amount of the light beam received when passing the position C is smallest. The absolute value of the difference between the amount of the light beam received when passing the position B and the amount of the light beam received when passing the position C increases with an increase in the deviation of the light beam from the track 70.

As described above, the direction and amount of the deviation of the beam 70 from the track 70 can be determined from the difference between the amount of the light beam received when passing the position B and the amount of the light beam received when passing the position C. Therefore, the tracking error information can be generated such that the difference in amount of received light received between the light beam passing the position B and the light beam passing the position c is taken as a tracking error signal.

The tracking servo-control operation in this example is performed as follows. First, the timing of the first peak of the light beam amount received by the photodetector, namely, the timing when the light beam passes the position A is detected. Then, the timing when the light beam passes the position B and the timing when light beam passes the position C are calculated with the detected timing when the light beam passes the position A taken as a standard.

Next, the amount of the light beam received when passing the position B and the amount of the light beam received when passing the position C are detected at respective timings calculated, and the difference between the both amounts is detected and taken as a tracking error signal. And the tracking servo-control operation is performed according to the tracking error signal so that the light beam 72 always follows the track 70. In this connection, when the light beam 72 passes the data area 7, the tracking servo-control operation is not performed, thereby maintaining the state when the light beam 72 have passed the immediately preceding address-servo area 6.

The generation of tracking error information and the tracking servo-control operation in the present invention do not have to be performed in the manner as mentioned above, but may be performed using, for example, a push-pull method, in which the address-servo area 6 is provided with a series of pits arrayed along the track direction as positioning information for tracking servo-control, and tracking error information is generated by detecting the change in the shape of incident light at the light receiving face of the photodetector.

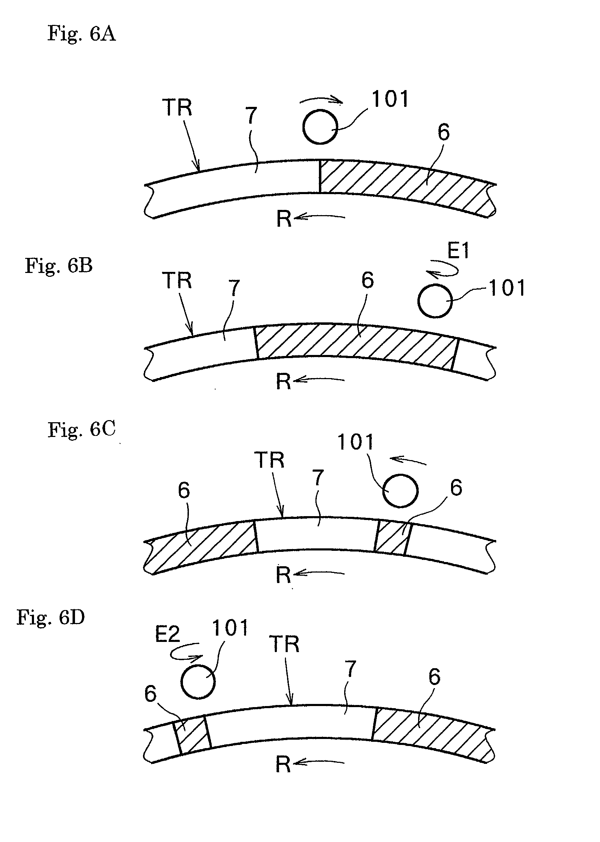

Next, the operation of the optical head 40 at the time of recording information will be explained with reference to Figs. 6A to 6D, in which the movement of a track TR, and the movement of an irradiation position 101 of information beam and recording reference beam are shown, where the symbol R represents the direction of the rotation of the recording medium 1. In Figs. 6A to 6D, the irradiation position 101 is presented so as not to be superposed on the track TR for convenience sake, though actually it is superposed thereon.

In this embodiment, the irradiation position 101 travels from the neutral point in a direction (hereinafter referred to as forward direction) opposite to the traveling direction R of the recording medium 1 before information is recorded in the data area 7 of the recording medium 1, as shown in Fig. 6A. In this traveling time, the irradiation position 101 passes the address-servo area 6, and the information recorded in the address-servo area 6 is detected by the optical head 40.

Next, the irradiation position 101, upon reaching an end E1 (the right end of the address-servo area 6), that is, the farthest traveling range in the forward direction, starts traveling backward in the direction (hereinafter referred to as backward direction) corresponding to the traveling direction R of the recording medium 1 as shown in Fig. 6B. Immediately after starting traveling in the backward direction, the irradiation position 101 travels slower than the data area 7 in which information is to be recorded, and therefore is superposed soon on the data area 7.

Referring to Fig. 6C, the irradiation position 101, when superposed on the data area 7, has its traveling speed adjusted to the traveling speed of the data area 7 so as to stand still relative to the data area 7 so that information is recorded on the same position thereof. Thus, the irradiation position 101 travels so as to follow the data area 7 desired.

The optical head 40 records information while following the data area 7, and the irradiation position 101, upon reaching an end E2 (the left end of the data area 7), that is, the farthest traveling range in the backward direction, starts traveling again in the forward direction as shown in Fig. 6D, and comes up with the step of the operation shown in Fig. 6A. Thus, the optical head 40 performs its operation by repeating the steps shown in Figs.6A to 6D.

As described above, in this embodiment, the irradiation position 101 travels so the irradiation position of the information beam and the recording reference beam follows for a specific time one data area 7 traveling. Consequently, the one data area 7 is kept irradiated with the information beam and the recording reference beam for the specific time, and information is recorded in the one data area 7 by an interference pattern generated due to the information beam interfering with the recording reference beam. Hereinafter, the time during which the irradiation position 101 follows the one data area 7 is referred to as follow-up time, and the rest of time is referred to as catch-up time.

Referring to Fig. 7, the above described travel of the irradiation position 101 is represented in a coordinate system with the absolute position on the axis of abscissa and the time on the axis of ordinate. Symbols R, E1 and E2 respectively represent the rotation direction of the recording medium 1, the end of the traveling range in the forward direction of the irradiation position 101, and the end of the traveling range in the backward direction of the irradiation position 101, and symbols T1 and T2 represent follow-up time and catch-up time, respectively. Although the catch-up time T2 is shorter than the follow-up time T1 in the figure for simplification purpose, actually the catch-up time T2 is longer than the follow-up time T1.

In this embodiment, one data area 7 is kept irradiated with information beam and recording reference beam for the follow-up time T1, and thereby an interference pattern generated due to the information beam interfering with the recording reference beam, namely, a hologram holding information is formed in the data area 7. Symbols H1 to H6 represent holograms recorded in this order.

Next, the method of matching the irradiation position 101 of information beam and recording reference beam with the position of one data area 7 concerned will be explained with reference to Figs. 8A to 8D. Fig. 8A shows pits P to be recorded in one address-servo area 6, and Fig. 8B shows three tracks TR1, TR2 and TR3. One data area 7 comprising a plurality of portions, for example four portions a, b, c and d in Fig. 8B, is provided between any two adjacent address-servo areas 6 on each track.

Paths of the irradiation position 101 of information beam and recording reference beam in case of recording information on the tracks TR1 and TR2 are shown in Figs. 8C and 8D, respectively, where the axes of abscissas represent the irradiation positions 101 relative to the tracks, and the axes of ordinates represent the time. In this embodiment, during the catch-up time T2, the irradiation position 101 passes the address-servo area 6, and information recorded in the address-servo area 6 is detected by the optical head 40.

And, according to the output detected by the optical head 40, the controller 90 (see Fig. 2) recognizes the address of a data area 7 existing between an address-servo area 6 which the irradiation position 101 has passed and a next address-servo area 6. Also, when the irradiation position 101 passes the address-servo area 6, the basic clock CB is generated according to the output detected by the optical head 40 as described later.

The controller 90 selects one portion out of the four portions a, b, c, and d constituting the data area 7 existing between any two adjacent address-servo areas 6, and information is to be recorded in the one portion selected. The positions of the four portions a, b, c and d in Fig. 8B, constituting the data area 7 existing between any two adjacent address-servo areas 6, can be identified by the time represented by the basic clock CB.

The controller 90 matches the irradiation position 101 with the position of the one selected portion by changing, according to the position of the selected one portion to record information in, the profiles of driving voltages to be applied to the coils 310 and 311 adapted to move the objective lens 11 on the carriage 320 substantially in the direction along the track.

In this embodiment, information is recorded on one specified track as follows. First, information is recorded at the portion a existing in each of the data areas 7 on the same track while the recording medium 1 makes its first one-turn. Then, further information is recorded at the portions b, c and d existing in each of the information recording areas 7 on the same track while the optical information recording medium 1 makes its second, third and fourth one-turns, respectively.

After information is recorded at all the portions a to d existing in each of the data areas 7 on the one track, the above described recording process is performed on the next track. In Figs. 8C and 8D, the path of the irradiation position 101 in each one turn of the recording medium 1 is shown with reduction in the time axis direction.

A follow-up control circuit 94 for controlling an irradiation position and a signal converting means 51 for obtaining a reproduction signal RF from an address-servo area will be described with reference to Fig. 9.

The follow-up control circuit 94 is composed of: a binary-coding means 52 for binary-coding the reproduction signal RF obtained from the signal converting means 51; and a follow-up signal circuit 50. The follow-up control circuit 94 detects a travel amount of the irradiation position moving means 41, whereby an irradiation position control signal traveling in one data area is generated according to the detected travel amount for a specific time period for which the irradiation positions of the information beam and the reference beam keep following. The signal converting means 51 is mounted on a substrate (not shown) of the irradiation position moving means 41 in one body, and the follow-up control circuit 94 is mounted on a substrate (not shown) of the optical head moving means 321 in one body.

The follow-up signal circuit 50 is composed as follows. As described in Fig. 3A, the follow-up signal circuit 50 is provided with a light emitting diode 23 and photodiodes 24a and 24b for receiving light from the reflecting plate 22 made of, for example, an aluminum foil and adapted to reflect light from the light emitting diode 23, and the above three are arranged on the bottom face 320a of the irradiation position moving means 41. The output terminals of the photodiodes 24a and 24b of the follow-up signal circuit 50 are connected to a differential amplifier 37 for detecting the difference in output between the photodiodes 24a and 24b, and the output terminal of the amplifier 37 is connected to a comparator 38 which makes an output when the output of the differential amplifier 37 passes a point of zero.

Further, the output terminal of the comparator 38 is connected to one input terminal a0 of a phase comparator 34 and the other input terminal b0 thereof is connected to the output terminal of a binary-coding circuit 32 provided in a binary-coding means 52 described later. The output terminal of the phase comparator 34 is connected to a filter circuit 35 for removing higher harmonic of the output of the phase comparator 34, and the filter circuit 35 is connected to a voltage control oscillator 36 whose oscillation frequency is changed according to the magnitude of a signal from the filter circuit 35.

The above mentioned output terminal of the differential amplifier 37 is also connected to another filter circuit 39 for taking out a direct current component of the output of the differential amplifier 37, and the output terminal of the filter circuit 39 is connected to an amplifier 46 for inverting the polarity of a signal of the filter circuit 39, and further, the output terminal of the amplifier 46 is connected to one input terminal a2 of a gain control amplifier 47.

The other input terminal b2 of the gain control amplifier 47 is connected to the output terminal of the voltage control oscillator 36. Also, a value CV for adjusting a gain is set by the controller 90 and provided at a control terminal c2 of the gain control amplifier 47 through a terminal CC so that the gain control amplifier 47 has a prescribed gain according to the sensitivity of the recording medium 1 or the intensity of a laser beam used for recording and reproduction.

The set value described above is determined based on the type of the gain control amplifier 47, and is set as a digital signal in case the gain adjustment of the gain control amplifier 47 is digital-controlled and is set as an analog signal in case it is analog-controlled. The output of the gain control amplifier 47 is applied to coils 310 and 311 of the irradiation position moving means 41 (neither shown).

The signal converting means 51 is provided with a laser beam source 25 for emitting a laser beam to be radiated onto the recording face of the recording medium 1, a half mirror 26 for guiding the laser beam to the recording face of the recording medium 1, and a collimator lens 27 for concentrating the laser beam which has passed through the half mirror 26 on the photodetector 28.

The laser beam reflected by the half mirror 26 and the prism 21 is concentrated by the objective lens 11 to be radiated onto the recording face of the recording medium 1, reflected thereat, takes the incoming optical path backward, passes through the half mirror 26 and the collimator lens 27, and is received by the photodetector 28 to be converted thereby into an electric signal, and the photodetector 28 has a reproduction signal RF from an address-servo area gained at its output terminal.

The binary-coding means 52 is composed of a current/voltage converter 29 which is connected to the photodetector 28 provided in the signal converting means 51, and which converts a current output of the photodetector 28 into voltage, a comparator 30 for determining a threshold value for binary-coding the output of the current/voltage converter 29, and a differentiator comprising a capacitor 31 and adapted to differentiate the output of the current/voltage converter 29. One input terminal "-" of the comparator 30 is connected to the output terminal of the current/voltage converter 29, and a threshold value VS for binary-coding is applied to the other input terminal "+".

Further, the binary-coding means 52 is provided with a binary-coding circuit 32 for binary-coding a signal from the capacitor 31. One input terminal b1 of the binary-coding circuit 32 is connected to the output terminal of the differentiator 31, and the other input terminal a1 is connected to the output terminal of the comparator 30. Also, the output terminal c1 of the binary-coding circuit 32 is connected to the other input terminal b0 of a phase comparator 34 provided in the follow-up signal circuit 50 and is also connected to the input terminal of a PLL (phase locked loop) circuit 33 for generating an address decoding signal of a data area 7.

The output of the PLL circuit 33 is produced through a terminal ADC as a signal AD, and the output of the binary-coding circuit 32 is produced through a terminal CBC as a basic clock CB to be timing standards for various operations in the optical information recording and reproducing apparatus, and the both outputs are outputted from the terminals ADC and CBC, respectively, and are inputted into the signal processing circuit 89 described in Fig. 2.

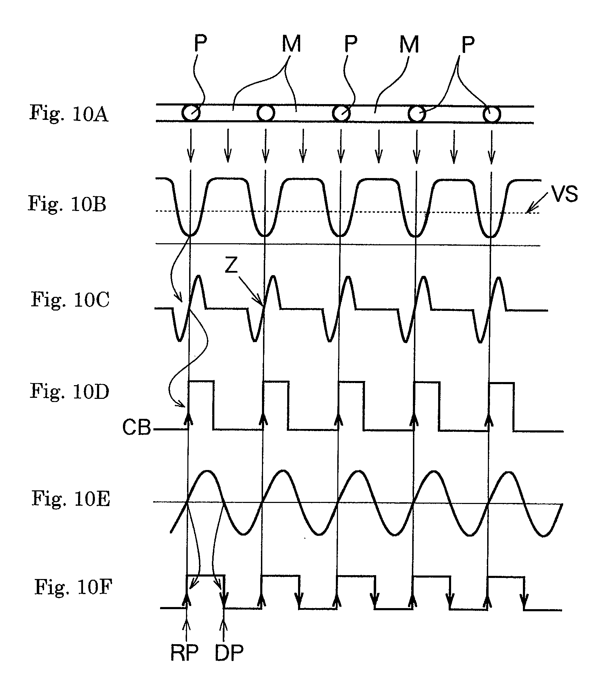

Fig. 10A is a diagram showing pit portions P and mirror portions M on an arbitrary track of the optical information recording medium 1, where the mirror parts have a high reflectance and the pit parts have a low reflectance. Figs. 10B to 10F are diagrams showing waveforms at the positions indicated by arrows v, w, x, y and z shown in Fig. 9. The operations of the circuits shown in Fig. 9 will be explained with reference to figs. 10A to 10F.

As described in Fig. 2, the optical information recording and reproducing apparatus comprises: the spindle 81 to which the recording medium 1 is attached; the spindle motor 82 to rotate the spindle 81; and a spindle servo-control circuit (not shown) for controlling the spindle motor 82, wherein the recording medium 1 attached to the spindle 81 is rotated at a constant speed by the spindle motor 82.

The recording face of the recording medium 1 is irradiated with a laser beam which is emitted from the laser beam source 25, reflected by the half mirror 26 and the prism 21, and which passes through the objective lens 11. The laser beam radiated onto the recording face of the recording medium 1 is reflected thereat, takes the incoming path backward, is reflected by the prism 21, passes through the half mirror 26 and the collimator lens 27, and is incident on the photodetector 28.

The laser beam incident on the photodetector 28 is converted into a voltage by the current/voltage converter 29, thereby providing the output terminal of the current/voltage converter 29 with output having, as shown in Fig. 10B, a high level at each of the mirror portions M and a low level at each of the pit portions P in the address-servo area. When this output is differentiated, a waveform, which, as shown in Fig. 10C, becomes zero at the middle of each of the pit portions P, is provided at the output terminal of a capacitor 31.

The output of the capacitor 31 is inputted into one input terminal b1 of the binary-coding circuit 32 and is binary-coded at a level where the output of the capacitor 31 becomes zero (at the middle of each of the pit portions P). Here, the output of the current/voltage converter 29 is applied to the one input terminal "-" of the comparator 30 and a threshold value VS for binary-coding is applied to the other input terminal "+", and when the output of the current/voltage converter 29 is equal to or smaller than the threshold value VS, the output of the comparator 30 can be obtained.

When the output of the comparator 30 is applied to the other input terminal a1 of the binary-coding circuit 32, the operation of the binary-coding circuit 32 is effected. That is to say, binary-coding operation is inhibited at points of zero except points Z which correspond to the centers of the pit portions P where a waveform becomes zero, and the output formed by binary-coding an output rising at the middle of each of the pit portions P is obtained at an output terminal c1 of the binary-coding circuit 32 (see Fig. 10D).

The signal shown in Fig. 10D obtained at the output terminal c1 of the binary-coding circuit 32 is inputted into the signal processing circuit 89 described in Fig. 2 as the signal AD through the terminal ADC by the PLL circuit 33 for generating the address decoding signal of the data area 7.

Also, the signal shown in Fig. 10D is outputted from the terminal CBC as the basic clock CB to be timing standards for various operations in the optical information recording and reproducing apparatus and is inputted into the signal processing circuit 89. Further, the output of the binary-coding circuit 32 is applied to the other input terminal b0 of the phase comparator 34 provided in the follow-up signal circuit 50.

The light emitting diode 23 provided on the bottom face of the carriage 320 of the irradiation position moving means 41 emits light having a prescribed intensity, and the light is reflected by the reflecting plate 22. The photodiodes 24a and 24b receiving the light from the reflecting plate 22 are disposed along the circumferential direction of the recording medium 1, namely, in the direction the irradiation position moving means 41 travels almost along the track TR. Outputs equal to each other are obtained from the photodiodes 24a and 24b at the middle point of the travel distance of the irradiation position moving means 41.

When the irradiation position 101 of the information beam and the recording reference beam is set at the position of a desired data area 7 as described in Figs. 8A to 8D, and the irradiation position moving means 41 is driven by a sine-wave driving voltage of the gain control amplifier 47 and is moved either in the forward direction or backward direction along the track from the middle point as described later, the output shown in Fig. 10E is obtained at the output terminal of the differential amplifier 37. Here, when the driving voltage of the gain control amplifier 47 has a positive value, a force to move the irradiation position moving means 41 in the forward direction is provided, and when it has a negative value, a force to move the irradiating position moving means 41 in the backward direction is provided.

When the irradiation position moving means 41 travels in either direction, the outputs of the photodiodes 24a and 24b lose the balance and make a difference therebetween. This output difference is detected and amplified by the differential amplifier 37 and the output thereof is applied to the comparator 38. The comparator 38 makes an output when the output of the differential amplifier 37 passes each of the points of zero, as shown in Fig. 10F. That is to say, the positions corresponding to a rising point RP and a falling point DP of the output signal of the comparator 38 each show a middle point of the traveling distance of the irradiation position moving means 41.

The output from the comparator 38 is applied to one input terminal a0 of the phase comparator 34 and is compared in phase with the output from the binary-coding circuit 32. And an output corresponding to the phase difference resulting from the comparison is obtained at a terminal c0 of the phase comparator 34. The higher harmonic component of such a signal from the terminal c0 of the phase comparator 34 is removed by the filter circuit 35, and the signal is applied to the voltage control oscillator 36 whose oscillation frequency changes according to the magnitude of the signal.

An oscillation frequency fA of the voltage control oscillator 36 turns into a follow-up frequency of a driving voltage to be applied in order to move the head in the irradiation position moving means 41. The output waveform of the voltage control oscillator 36 is a sine wave. That is to say, the irradiation position moving means 41, when driven by sine-wave driving, travels smoothly, and also the composition of its driving circuit is simplified, and since no higher harmonic noise is generated from the driving circuit, a signal read out from the recording medium is prevented from getting mixed with noises. Therefore, the output waveform of the voltage control oscillator 36, which is not a sine wave, may be converted into a sine wave by the gain control amplifier 47.

The output of the voltage control oscillator 36 is applied to one input terminal b2 of the gain control amplifier 47. The direct current component of the output of the differential amplifier 37 is extracted by the filter circuit 39. The filter circuit 39 is a compensating means for making the outputs of the light detecting means 43 equal to each other, and its signal has its polarity inversed by the amplifier 46 and then is applied to the other input terminal a2 of the gain control amplifier 47.

When the filter circuit 39 has a direct current component, the outputs of the photodetector are different from each other indicating that the optical head is not positioned at the middle point but deviated to either side relative to the direction along the track. Therefore, the direct current component of the filter circuit 39 has its polarity inversed and is applied to the gain control amplifier 47 to drive the irradiation position moving means 41, whereby the position of the optical head is corrected such that the outputs of the photodetector 43 are made equal to each other so that the position of the optical head is moved to the middle point.

In the example shown in Fig. 9, the carriage 320, namely the objective lens 11 is driven by applying sine-wave signals to the coils (310) and (311). From this driving operation, the follow-up time T1, the catch-up time T2, the end E1 of the travel range of the forward direction of the irradiation position 101, and the end E2 of the travel range of the backward direction of the irradiation position 101, which are mentioned in Fig. 7, are determined follows.

First, the follow-up time T1 is determined as follows. The follow-up time of the optical head (corresponding to a recording time for recording in the recording medium 1) is determined by the product of the sensitivity of a recording medium and the intensity of a laser beam irradiated. The output of the gain control amplifier 47 is of a sine wave, therefore if an inclination in the vicinity of a point of zero of the waveform is approximated to a straight line, there is no significant influence on the relation between the sensitivity of the recording medium and the recording time. That is to say, the follow-up time T1 is determined in a range in which a linear approximation is possible without using the maximum amplitude of the sine wave, and the follow-up time T1 is set at around the rising point RP of output of the comparator 38, which represents the middle point of the travel amount of the irradiation position moving means 41. Its absolute value is determined in consideration of the rotation speed and the sensitivity of the recording medium, the intensity of the laser beam, the loss of the optical system and the like. And the rest of time is defined as the catch-up time T2.

Next, the end E1 of the travel range of the irradiation position 101 in the forward direction and the end E2 of the travel range of the irradiation position 101 in the backward direction are determined as follows. Since, for the distance between the ends E1 and E2, the follow-up operation is performed in the range in which a linear approximation is possible without using the maximum amplitude of a sine wave as described above, the range in which this approximation is effective should be as large as possible. Specifically, a longer distance between the ends E1 and E2 (the amplitude of the gain control amplifier 47) is preferred. However, too long distance exceeds the maximum travel range of the irradiation position moving means 41. The set value CV from the controller 90 shown in Fig. 2 applied to the terminal c2 of the gain control amplifier 47 is adjusted according to the sensitivity of the recording medium or to the intensity of the laser beam used for recording or reproduction. This adjustment operation is performed while the output of the differential amplifier 37 is observed with an oscilloscope.

The objective lens 11 travels as the follow-up time T1 from the middle point of the travel amount of the irradiation position moving means 41 in the backward direction at a constant speed equal to the travel speed of the data area 7 and at a frequency synchronous with the interval of each of the pit portions P. After stopping temporarily at the end E2 of the travel range of the backward direction, the objective lens 11 starts traveling in the forward direction for the catch-up time T2, and stops temporarily upon reaching the end E1 of the travel range of the forward direction, then starts traveling in the backward direction slower than the data area 7 travels (the speed in the vicinity of a vertex of the sine wave).

Thus, a feedback means using the follow-up control circuit 94 is provided in order to make the irradiation position of the irradiation position moving means follow a data area, detecting the accurate position of the irradiation position moving means, whereby information can be recorded in each data area utilizing holography while a recording medium having a plurality of data areas is moved.

The present invention is not limited to the above-mentioned embodiments but can be modified in various manners. For example, the present invention can be applied not only to a means of recording information in a disk-shaped rotating recording medium but also to a means of recording information in a card-shaped linearly moving recording medium, and the like.

Also, in the above-mentioned embodiments, address information, etc. are prerecorded as embossed pits in the address-servo area of the recording medium, but may alternatively be recorded to be formatted such that a high-power laser beam is selectively radiated onto a part near one surface of an information recording layer in order to selectively change the refractive index of the part.

## Claims

1. An optical information recording device for recording information by means of holography in each of a plurality of data areas of a recording medium having, in addition to said plurality of information recording areas, a plurality of address-servo areas each composed of: information for generating a basic clock as timing standards for various operations in an optical information recording and reproducing apparatus; information for performing focus servo-control operation by means of a sampled servo-control method; information for performing tracking servo-control operation by means of a sampled servo-control method; and address information, said optical information recording device comprising:
a light source for radiating an information beam and a reference beam onto said recording medium so as to record information in said plurality of data areas by means of an interference pattern generated due to said information beam interfering with said reference beam;
a recording medium moving means for moving said recording medium;
an irradiation position moving means for moving an irradiation position of said information beam and said reference beam by controlling said irradiation position so as to make said irradiation position follow for a specific time one data area moving; and
an optical head moving means for moving said irradiation position moving means in a track direction of said recording medium,
**characterized in that** said irradiation position moving means is adapted to detect a travel amount of said irradiating position moving means and to generate, according to said travel amount detected and for said specific time during which said irradiation position of said information beam and said reference beam follows, an irradiation position control signal for controlling said irradiation position moving in said one data area.

2. An optical information recording device according to claim 1, wherein said irradiation position moving means generates said irradiation position control signal according to a signal obtained from said address-servo areas and according to said travel amount of said irradiation position moving means.

3. An optical information recording device according to claim 1 or 2, wherein said irradiation position moving means makes a phase comparison between a signal obtained when said irradiation position moving means is positioned at a middle point of its travel range and said signal obtained from said address-servo areas, and controls said irradiation position moving means so as to surrender a phase difference between both signals to zero.

4. An optical information recording device according to any one of claims 1 to 3, wherein said irradiation position moving means comprises: a light reflecting means; a light radiating means for radiating light onto said light reflecting means; and a plurality of light detecting means for detecting, as reflected light, said light radiated from said light radiating means onto said light reflecting means and reflected thereat, said light detecting means being arranged in a circumferential direction of said recording medium.

5. An optical information recording device according to claim 4, wherein said light reflecting means, said light radiating means, and said light detecting means are provided on a side of said irradiation position moving means opposite to a side facing said recording medium.

6. An optical information recording device according to claim 4 or 5, wherein said light reflecting means is made of a rectangular aluminum foil and has a length in said circumferential direction of said recording medium smaller than said travel range of said irradiation position moving means.

7. An optical information recording device according to claim 4, wherein said light reflecting means, said light radiating means, and said light detecting means are arranged such that said plurality of light detecting means can produce respective outputs equal to one another when said irradiation position moving means is positioned at said middle point of said travel range.

8. An optical information recording device according to claim 4, wherein a driving signal for driving said irradiation position moving means is of a sine wave.

9. An optical information recording device according to claim 4, wherein said irradiation position moving means is provided with a compensating means which, in case of respective outputs of said plurality of light detecting means being different from one another, makes said respective outputs equal to one another when a driving signal for driving said irradiation position moving means passes a point of zero.
